# EUROPÄISCHE PATENTSCHRIFT

(11) **EP 1 604 846 B1**
(45) Veröffentlichungstag und Bekanntmachung des Hinweises auf die Patenterteilung: **11.04.2007**
(21) Anmeldenummer: 05005078.0
(22) Anmeldetag: 09.03.2005
(51) Int. Cl.: B60G 21/05

(54) **Verbundlenkerachse**
Twist beam axle
Essieu à traverse déformable en torsion

(30) Priorität: 08.06.2004 DE 102004027779
(43) Veröffentlichungstag der Anmeldung: 14.12.2005
(73) Patentinhaber: Benteler Automobiltechnik GmbH, 33104 Paderborn (DE)
(72) Erfinder: Tigges, Dominique, 33161 Hövelhof (DE); Bense, Dirk, 33102 Paderborn (DE); Flott, Karsten, 33098 Paderborn (DE)
(74) Vertreter: Griepenstroh, Jörg

(56) Entgegenhaltungen:
- US-A- 4 750 757
- US-A- 4 951 962
- PATENT ABSTRACTS OF JAPAN Bd. 011, Nr. 120 (M-580), 15. April 1987 (1987-04-15) & JP 61 262242 A (BRIDGESTONE CORP), 20. November 1986 (1986-11-20)

## Beschreibung

Die Erfindung betrifft eine Verbundlenkerachse mit den Merkmalen des Patentanspruchs 1.

Die DE 198 05 463 A1 offenbart eine Verbundlenkerhinterachse mit einem biegesteifen und torsionsweichen Querträger, wobei an jedem Ende des Querträgers ein Längsträger angeordnet ist und jeder Längsträger einen Ends zur Aufnahme eines Radträgers und anderen Ends zur Anlenkung an einen Fahrzeugaufbau entsprechend ausgebildet ist, wobei ein stabähnlicher Stabilisator zwischen den Längsträgern angeordnet ist und der stabähnliche Stabilisator über ein Stabilisatorelement funktionell mit dem Querträger in Kontakt steht. Die bei der Fahrt auftretenden Fahrzeuggeräusche sind dadurch minimiert, dass durch eine bestimmte, zum Mittelpunkt des Querträgers bzw. Stabilisators außermittige Anordnung des Stabilisatorelements die bei der Fahrt auftretenden Biegeschwingungen des Stabilisators in Fahrzeug-Hochrichtung zur Reduzierung der auftretenden Geräusche entsprechend angepasst sind. Das Stabilisatorelement ist als Gummielement ausgebildet, wobei das Stabilisatorelement relativ zum Stabilisator drehbar gelagert ist. Derartige Gummielemente zählen auch durch die US 4,951,962 zum Stand der Technik. Der Werkstoff Gummi dient hierbei ebenfalls zur Vibrationsdämpfung des Stabilisators.

Das Komfortverhalten eines Kraftfahrzeugs kann unter anderem von Eigenfrequenzen des Stabilisators beeinträchtigt werden. Bei niedriger Eigenfrequenz des Stabilisators können Anregungen durch die Fahrbahn zu Schwingungen des Stabilisators führen, die im Fahrgastraum wahrgenommen werden. Es ist bekannt, die Eigenfrequenz eines schwingenden Systems abhängig von der freien Länge, der Geometrie und des Querschnitts des Stabilisators, zu verändern. Lösungen, die sich auf Änderungen der Geometrie und/oder des Querschnitts des Stabilisators beziehen, können Nachteile hinsichtlich der gewünschten Steifigkeit, des Gewichts und/oder der Dauerhaltbarkeit haben. Insbesondere sind die bekannten Stabilisatorelemente, die zur Beschränkung der freien Länge des Stabilisators vorgesehen sind, auf einen bestimmten Stabilisatorquerschnitt abgestimmt.

Hiervon ausgehend liegt der Erfindung die Aufgabe zugrunde, eine Verbundlenkerachse aufzuzeigen, bei welcher unter Verwendung eines Stabilisators der Fahrkomfort durch Änderung der Eigenfrequenz des schwingenden Systems erhöht wird, wobei mit einem einzigen Stabilisatorelement unterschiedliche Stabilisatorquerschnitte und damit unterschiedliche Steifigkeiten des Stabilisators realisierbar sind.

Diese Aufgabe ist bei einer Verbundlenkerachse mit den Merkmalen des Patentanspruchs 1 gelöst.

Vorteilhafte Weiterbildungen sind Gegenstand der abhängigen Ansprüche.

Die erfindungsgemäße Verbundlenkerhinterachse besitzt einen als V-förmiges Profil ausgebildeten Querträger, an dessen Enden jeweils Längsträger angeordnet sind. Innerhalb des Querträgers verläuft ein drehmomentfest mit den Längsträgern verbundener stabförmiger Stabilisator, der zur Veränderung der Eigenfrequenz mit einem Stabilisatorelement gegenüber dem Querträger lageorientiert ist. Das Stabilisatorelement verfügt als separates Bauteil über eine zentrale Aufnahme zur lösbaren Eingliederung des Stabilisators. Wesentlich ist, dass das Stabilisatorelement bei der erfindungsgemäßen Verbundlenkerachse nicht die Aufgabe hat, störende Schwingungen oder Klappergeräusche des Stabilisators zu beseitigen, sondern die Eigenfrequenz des aus Querträger und Stabilisator bestehenden schwingenden Systems insgesamt zu verändern. Elastomere Werkstoffe wie Gummi sind aufgrund ihrer spezifischen Dämpfungseigenschaften in der Regel nicht geeignet, die Schwingungen des Stabilisators in der gewünschten Art auf den Querträger zu übertragen und ein auf diese Weise gekoppeltes schwingfähiges Gesamtsystem mit veränderter Eigenfrequenz zu bilden. Es ist daher wesentlich, dass das Stabilisatorelement aus einem Werkstoff besteht, der eine hinreichende Steifigkeit besitzt, um als zusätzliche Lagerung des Stabilisators innerhalb des V-förmigen Profils die freie Länge des schwingenden Systems begrenzen zu können. Erst dadurch wir die Eigenfrequenz in die gewünschten Bereiche verschoben, das heißt angehoben und die daraus entstehende Anregung vermindert oder verhindert. Bevorzugt besteht das Stabilisatorelement daher aus einem Thermoplast oder einem Duroplast, und zwar insbesondere aus Durethan. Es handelt sich bei dem Stabilisatorelement somit um einen Kunststoffclip, dessen zentrale Aufnahme von einem ringförmigen Aufnahmeabschnitt gebildet ist. Dieser Aufnahmeabschnitt ist unter elastischer Aufweitung eines Mündungsabschnitts radial auf den Stabilisator aufclipbar. Der Aufnahmeabschnitt umgibt den stabförmigen Stabilisator somit nicht vollumfänglich, sondern lediglich so weit, dass er durch die Rückstellkraft des Kunststoffclips fest und insbesondere unverlierbar auf dem Stabilisator gehalten ist. Um einen Verbund zwischen dem V-förmigen Profil und dem Stabilisator herzustellen, sind sich an den Mündungsabschnitt im Abstand zum ringförmigen Aufnahmeabschnitt vom Scheitelpunkt des V-förmigen Profils weg weisende, rückwärts gerichtet verlaufende Federschenkel vorgesehen, die in der Einbaulage federnd gegen die Flanken des V-förmigen Profils gedrückt sind. Des Weiteren ist die Federkraft des Aufnahmeabschnitts sowie die Federkraft der Federschenkel derart bemessen, dass in die zentrale Aufnahme Stabilisatoren unterschiedlicher Durchmesser eingliederbar sind, wobei die Stabilisatoren unterschiedlicher Durchmesser in federndem Kontakt mit der Aufnahme stehen.

In vorteilhafter Ausgestaltung des Erfindungsgedankens sind die Federschenkel mit ihren dem Mündungsabschnitt abgewandten freien Enden an Abkantungen des V-förmigen Profils des Querträgers abgestützt. Dadurch sind die Stabilisatorelemente innerhalb des V-förmigen Profils lageorientiert und können Eigenfrequenzen des Stabilisators in allen Querebenen des stabförmigen Stabilisators dämpfen bzw. verändern. Die Abstützung an den Abkantungen des V-förmigen Profils begrenzen die radiale Nachgiebigkeit in Richtung auf die Abkantungen.

In der Ausführungsform gemäß Patentanspruch 3 besitzen die freien Enden der Federschenkel in Richtung des ringförmigen Aufnahmenabschnitts weisende Abwinklungen, die gemäß den Merkmalen des Patentanspruchs 4 parallel zu den Abkantungen verlaufen. Insbesondere verlaufen die Federschenkel parallel zu den Flanken des V-förmigen Profils (Patentanspruch 5). Dadurch ist das Stabilisatorelement formschlüssig innerhalb des V-förmigen Profils aufgenommen, wodurch die radiale Nachgiebigkeit des Stabilisatorelements stark begrenzt wird und die gewünschte Veränderung der Eigenfrequenz des Stabilisators erzielt werden kann.

Das Stabilisatorelement ist vorzugsweise vollständig innerhalb des V-förmigen Profils aufgenommen. Das wird unter anderem dadurch erreicht, dass die Abkantung des V-förmigen Profils länger als die Abwinklungen an den freien Enden des Federschenkels sind sowie dadurch, dass die dem Scheitelpunkt des V-förmigen Profils abgewandte Seite des ringförmigen Aufnahmeabschnitts abgeflacht ausgeführt ist.

Besonders kostengünstig ist ein Stabilisatorelement herstellbar, das über seine sich in Stabilisatorlängsrichtung erstreckende Tiefe einen gleich bleibenden Querschnitt und eine konstante Wanddicke besitzt, da hierdurch die Herstellung durch Ablängen eines extrudierten Kunststoffstrangs ermöglicht wird. Eine besonders einfache wie zweckmäßige Profilierung der Stabilisatorelemente wird darin gesehen, wenn sie über ihre von den einen freien Enden zu den anderen freien Enden gemessene Längserstreckung gleich bleibende Wanddicke besitzen.

Die Federschenkel sollen so weit auffedern können, dass ihre freien Enden in einer Ebene mit der dem Scheitelpunkt des V-förmigen Profils abgewandten Seite liegen. Die Federschenkel müssen eine hinreichende Spannkraft und Dauerschwingfestigkeit besitzen, um während der gesamten Lebensdauer der Verbundlenkerachse die gewünschte Eigenfrequenzverschiebung des Stabilisators sicherstellen zu können.

Damit die Federschenkel fest an den Flanken des V-förmigen Profils anliegen bzw. gegen diese Flanken gedrückt werden, stehen die Federschenkel im entspannten Zustand in einem größeren Winkel zueinander als im gespannten Zustand, das heißt in der Einbaulage.

Die Erfindung wird nachfolgend anhand eines in schematischen Zeichnungen dargestellten Ausführungsbeispiels näher erläutert. Es zeigen:
- Figur 1: eine Seitenansicht eines Stabilisatorelements und
- Figur 2: eine perspektivische Ansicht des Stabilisatorelements der Figur 1, das an einem stangenförmigen Stabilisator eines Längsträgers einer Verbundlenkerachse montiert ist.

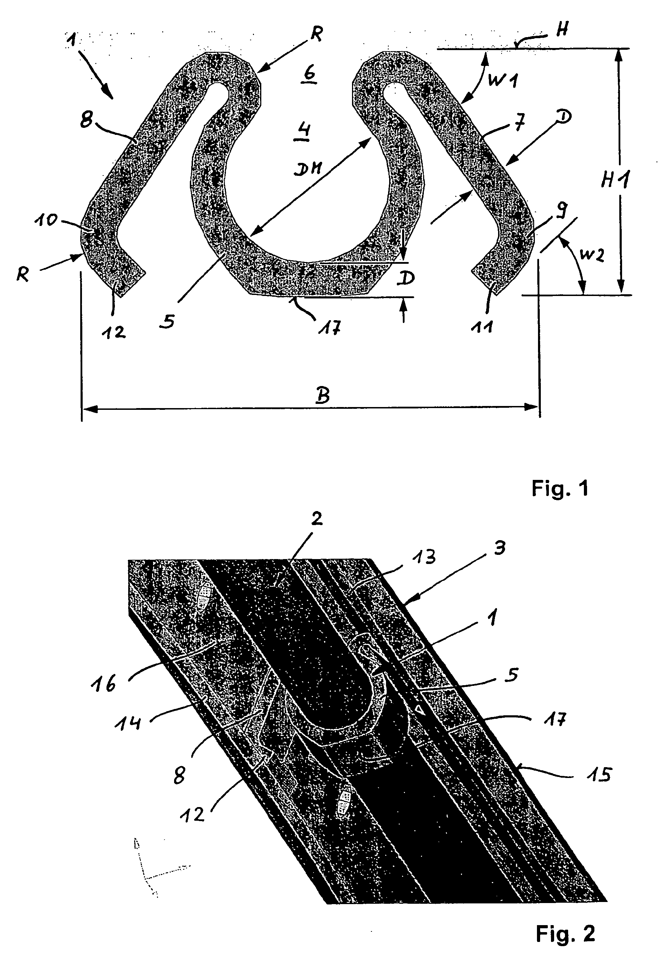

Die Figuren 1 und 2 zeigen ein Stabilisatorelement 1 in unterschiedlichen Ansichten. Das Stabilisatorelement 1 ist zur Montage an einem stabförmigen Stabilisator 2 vorgesehen, der innerhalb eines als V-förmiges Profil ausgebildeten Querträgers 3 einer nicht näher dargestellten Verbundlenkerachse verläuft. Der Querträger 3 ist in nicht näher dargestellter Weise mit Längsträgern der Verbundlenkerachse verbunden. Ebenso ist der stabförmige Stabilisator 2 mit den Längsträgern drehmomentfest verbunden, insbesondere verschweißt.

Das Stabilisatorelement 1 ist ein Kunststoffclip, der aus einem Thermoplast oder einem Duroplast, insbesondere Durethan, besteht. Das Stabilisatorelement 1 besitzt eine zentrale Aufnahme 4, die von einem ringförmigen Aufnahmeabschnitt 5 gebildet ist. Der Aufnahmeabschnitt 5 besitzt einen Mündungsabschnitt 6, der durch elastische Aufweitung über den Stabilisator 2 gedrückt werden kann. Hierzu ist der Mündungsabschnitt 6 abgerundet ausgeführt. Die Abrundungen des Mündungsabschnitts 6 dienen als Montage- und Einführhilfe. Dadurch besitzt der Aufnahmeabschnitt 5 mit dem Mündungsabschnitt 6 eine etwa Omega-förmige Gestalt. An den Mündungsabschnitt 6 schließen sich Federschenkel 7, 8 an, die im Abstand zu dem Aufnahmeabschnitt 5 verlaufen und gegenüber der in der Bildebene Horizontalen H einen Winkel von 57° im entspannten Zustand einnehmen. Der zu erkennende Abstand zwischen den Federschenkeln 7, 8 und dem Aufnahmeabschnitt 5 ist wichtig, damit beim Einsetzen des Stabilisatorelements 1 ein ausreichender Freiraum vorhanden ist, damit die freien Enden 9, 10 einfedern und mit ihren einander zugewandten Abwinklungen 11, 12 an den korrespondierenden Abkantungen 13, 14 der Flanken 15, 16 des V-förmigen Profils entlang gleiten können. Wenn der Mündungsabschnitt 6 maximal aufgeweitet ist, gleitet das Stabilisatorelement 1 selbsttätig auf den Stabilisator, wobei sich der Mündungsabschnitt 6 wieder verkleinert. Das Stabilisatorelement 1 schnappt quasi ein und umklammert den Stabilisator 2. Gleichzeitig greifen die freien Enden 9, 10 der Federschenkel 7, 8 hinter die Abkantungen 13, 14 und federn nach außen auf, so dass die Abwinklungen 11, 12 an den Abkantungen 13, 14 anliegen. Durch die Elastizität des Stabilisatorelements werden die Federschenkel 7, 8 nach außen, das heißt gegen die Flanken 15, 16 des V-förmigen Profils gedrückt, so dass das Stabilisatorelement 1 innerhalb des V-förmigen Profils gehalten ist. Das Stabilisatorelement 1 ist vorzugsweise mittig des Längsträgers, d.h. der Verbundlenkerachse angeordnet.

In diesem Ausführungsbeispiel besitzt das Stabilisatorelement über seine gesamte Länge eine im Wesentlichen gleich bleibende Wanddicke D von 6 mm. Diese ist lediglich in dem dem Mündungsabschnitt 6 abgewandten Bereich des Aufnahmeabschnitts 5 vergrößert, da diese Seite 17 des Aufnahmeabschnitts 5 außenseitig abgeflacht ausgeführt ist. Die Abflachung ist jedoch so bemessen, dass auch hier die gleich bleibende Wanddicke D an der dünnsten Stelle der abgeflachten Seite 17 nicht unterschritten wird.

Die Übergänge vom Mündungsabschnitt 6 auf die Federschenkel 7, 8 sowie die Übergänge von den Federschenkeln 7, 8 auf die Abwinklungen 11, 12 sind abgerundet ausgeführt. Der Rundungsradius R beträgt in diesem Ausführungsbeispiel 7 mm. Im entspannten Zustand nehmen die Abwinklungen 11, 12 einen Winkel W2 von 45° gegenüber der Horizontalen H ein. Der Durchmesser DM der Aufnahme 4 beträgt in diesem Ausführungsbeispiel 27 mm. Die Gesamtbreite B im entspannten Zustand beträgt 75 mm und die Höhe H1 41,5 mm.

Die nicht näher dargestellte, in die Ebene hinein ragende Tiefe des Stabilisatorelements beträgt 30 mm.

### Bezugszeichen:

- 1 -: Stabilisatorelement
- 2 -: Stabilisator
- 3 -: Querträger
- 4 -: Aufnahme
- 5 -: Aufnahmeabschnitt
- 6 -: Mündungsabschnitt
- 7 -: Federschenkel
- 8 -: Federschenkel
- 9 -: freies Ende v. 7
- 10 -: freies Ende v. 8
- 11 -: Abwinklung an 9
- 12 -: Abwinklung an 10
- 13 -: Abkantung v. 15
- 14 -: Abkantung v. 16
- 15 -: Flanke v. 3
- 16 -: Flanke v. 3
- 17 -: Seite v. 5

- B -: Breite
- D -: Wanddicke
- DM -: Durchmesser
- H -: Horizontale
- H1 -: Höhe
- R -: Radius
- T -: Tiefe
- W1 -: Winkel
- W2 -: Winkel

## Patentansprüche

1. Verbundlenkerachse mit einem als V-förmiges Profil ausgebildetem Querträger (3), wobei an jedem Ende des Querträgers (3) ein Längsträger angeordnet ist, wobei sich ein mit den Längsträgern drehmomentfest verbundener stabförmiger Stabilisator (2) innerhalb des Querträgers (3) erstreckt, welcher über ein Stabilisatorelement (1) gegenüber dem Querträger (3) lageorientiert ist, wobei das Stabilisatorelement (1) eine zentrale Aufnahme (4) zur lösbaren Eingliederung des Stabilisators (2) aufweist, **dadurch gekennzeichnet, dass** das Stabilisatorelement (1) ein aus einem Thermoplast oder einem Duroplast bestehender Kunststoffclip ist, dessen zentrale Aufnahme (4) von einem ringförmigen Aufnahmeabschnitt (5) gebildet ist, der unter elastischer Aufweitung eines Mündungsabschnitts (6) radial auf den Stabilisator (2) aufclipbar ist, wobei sich an den Mündungsabschnitt (6) im Abstand zum ringförmigen Aufnahmeabschnitt, vom Scheitelpunkt des V-förmigen Profils wegweisende, rückwärts gerichtet verlaufende Federschenkel (7, 8) anschließen, die in der Einbaulage federnd gegen die Flanken (15, 16) des V-förmigen Profils gedrückt sind, und wobei die Federkraft des Aufnahmeabschnitts (5) und der Federschenkel (7, 8) derart bemessen ist, dass in die zentrale Aufnahme (4) Stabilisatoren (2) unterschiedlicher Durchmesser eingliederbar sind, wobei die Stabilisatoren (2) unterschiedlicher Durchmesser in federndem Kontakt mit der Aufnahme (4) stehen.

2. Verbundlenkerachse nach Anspruch 1, **dadurch gekennzeichnet, dass** die Federschenkel (7, 8) mit ihren dem Mündungsabschnitt (6) abgewandeten freien Enden (9, 10) an Abkantungen (13, 14) des V-förmigen Profils des Querträgers ( ) abgestützt sind.

3. Verbundlenkerachse nach Anspruch 2, **dadurch gekennzeichnet, dass** die freien Enden (9, 10) der Federschenkel (7, 8) in Richtung des ringförmigen Aufnahmeabschnitts (5) weisende Abwinkelungen (11, 12) besitzen.

4. Verbundlenkerachse nach Anspruch 3, **dadurch gekennzeichnet, dass** die Abwinkelungen (11, 12) und die Abkantungen (13, 14) parallel zueinander verlaufen.

5. Verbundlenkerachse nach einem der Ansprüche 1 bis 4, **dadurch gekennzeichnet, dass** die Federschenkel (7, 8) parallel zu den Flanken (15, 16) des V-förmigen Profils verlaufen.

6. Verbundlenkerachse nach Anspruch 4 oder 5, **dadurch gekennzeichnet, dass** die Abkantungen (13, 14) länger sind als die Abwinkelungen (11, 12).

7. Verbundlenkerachse nach einem der Ansprüche 1 bis 6, **dadurch gekennzeichnet, dass** das Stabilisatorelement (1) eine über seine von dem einen freien Ende (9) zu dem anderen freien Ende (10) gemessene Längserstreckung eine gleich bleibende Wanddicke (D) besitzt.

8. Verbundlenkerachse nach einem der Ansprüche 1 bis 7, **dadurch gekennzeichnet, dass** das die dem Scheitelpunkt des V-förmigen Profils abgewandte Seite (17) des ringförmigen Aufnahmeabschnitts (5) abgeflacht ist.

9. Verbundlenkerachse nach einem der Ansprüche 1 bis 8, **dadurch gekennzeichnet, dass** die Federschenkel (7, 8) soweit auffedern können, dass ihre freien Enden (9, 10) in einer Ebene mit der dem Scheitelpunkt des V-förmigen Profils abgewandte Seite liegen.

## Claims

1. Twist-beam axle having a transverse member (3) embodied as a V-shaped profile, with a longitudinal member being arranged at each end of the transverse member (3), with a rod-like stabilizer (2), which is connected to the longitudinal members in a fixed manner in terms of torque, extending within the transverse member (3), which stabilizer (2) is positionally orientated relative to the transverse member (3) by means of a stabilizer element (1), with the stabilizer element (1) having a central receptacle (4) for detachably incorporating the stabilizer (2), **characterized in that** the stabilizer element (1) is a plastic clip which is composed of a thermoplastic or a thermosetting material and whose central receptacle (4) is formed by an annular holding section (5) which can be radially clipped onto the stabilizer (2) by elastically expanding an aperture section (6), with spring limbs (7, 8), which run in the reverse direction and point away from the apex of the V-shaped profile, adjoining the aperture section (6) at a distance from the annular holding section, which spring limbs (7, 8) are pressed resiliently against the flanks (15, 16) of the V-shaped profile when in the installed position, and with the spring force of the holding section (5) and of the spring limbs (7, 8) being dimensioned such that stabilizers (2) of different diameters can be incorporated in the central receptacle (4), with the stabilizers (2) of different diameters being in resilient contact with the receptacle (4).

2. Twist-beam axle according to Claim 1, **characterized in that** the spring limbs (7, 8) are supported with their free ends (9, 10), which face away from the aperture section (6), on edge-bent portions (13, 14) of the V-shaped profile of the transverse member (3).

3. Twist-beam axle according to Claim 2, **characterized in that** the free ends (9, 10) of the spring limbs (7, 8) have angled portions (11, 12) which point in the direction of the annular holding section (5).

4. Twist-beam axle according to Claim 3, **characterized in that** the angled portions (11, 12) and the edge-bent portions (13, 14) run parallel to one another.

5. Twist-beam axle according to one of Claims 1 to 4, **characterized in that** the spring limbs (7, 8) run parallel to the flanks (15, 16) of the V-shaped profile.

6. Twist-beam axle according to Claim 4 or 5, **characterized in that** the edge-bent portions (13, 14) are longer than the angled portions (11, 12).

7. Twist-beam axle according to one of Claims 1 to 6, **characterized in that** the stabilizer element (1) has a uniform wall thickness (D) over its longitudinal extent measured from one free end (9) to the other free end (10).

8. Twist-beam axle according to one of Claims 1 to 7, **characterized in that** that side (17) of the annular holding section (5) which faces away from the apex of the V-shaped profile is flattened.

9. Twist-beam axle according to one of Claims 1 to 8, **characterized in that** the spring limbs (7, 8) can deflect to such an extent that their free ends (9, 10) lie in a plane with the side which faces away from the apex of the V-shaped profile.

## Revendications

1. Essieu à traverse déformable en torsion comportant une traverse configurée avec un profil en forme de V (3), un longeron étant disposé sur chaque extrémité de la traverse (3), un stabilisateur en forme de barrette (2) raccordé aux longerons de façon rigide en moments de torsion s'étendant à l'intérieur de la traverse (3), lequel étant orienté en position par l'intermédiaire d'un élément stabilisateur (1) vis-à-vis de la traverse (3), ledit élément stabilisateur (1) présentant un logement central (4) pour l'incorporation amovible du stabilisateur (2), **caractérisé en ce que** l'élément stabilisateur (1) est formé à partir d'un clip plastique consistant en un thermoplastique ou en une résine thermodurcissable, dont le logement central (4) est formé par une section de logement circulaire (5) qui peut être encliquetée radialement par élargissement élastique d'une section d'ouverture (6) sur le stabilisateur (2), ladite section d'ouverture (6), à une certaine distance par rapport à la section de logement circulaire, venant se raccorder, à partir du point de sommet du profil en forme de V, à des branches de ressort (7, 8) s'étendant vers l'arrière, qui, dans la position de montage, sont comprimées de façon élastique en opposition aux flancs (15, 16) du profilé en forme de V, et la force de ressort de la section de logement (5) et des branches de ressort (7, 8) étant dimensionnée de façon à pouvoir incorporer dans le logement central (4), des stabilisateurs (2) de différents diamètres, lesdits stabilisateurs (2) de différents diamètres se trouvant en contact élastique avec le logement (4).

2. Essieu à traverse déformable en torsion selon la revendication 1, **caractérisé en ce que** les branches de ressort (7, 8) sont supportées par leurs extrémités libres détournées de la section d'ouverture (6) sur des biseautages (13, 14) du profilé en forme de V de la traverse (3).

3. Essieu à traverse déformable en torsion selon la revendication 2, **caractérisé en ce que** les extrémités libres (9, 10) des branches de ressort (7, 8) présentent des coudes (11, 12) orientés dans la direction de la section de logement circulaire (5).

4. Essieu à traverse déformable en torsion selon la revendication 3, **caractérisé en ce que** les coudes (11, 12) et les biseautages (13, 14) s'étendent parallèlement entre eux.

5. Essieu à traverse déformable en torsion selon l'une des revendications 1 à 4, **caractérisé en ce que** les branches de ressort (7, 8) s'étendent parallèlement aux flancs (15, 16) du profilé en forme de V.

6. Essieu à traverse déformable en torsion selon la revendication 4 ou 5, **caractérisé en ce que** les biseautages (13, 14) sont plus longs que les coudes (11, 12).

7. Essieu à traverse déformable en torsion selon l'une des revendications 1 à 6, **caractérisé en ce que** l'élément stabilisateur (1) présente une épaisseur de paroi constante (D) mesurée sur son extension en longueur d'une extrémité libre (9) à l'autre extrémité libre (10).

8. Essieu à traverse déformable en torsion selon l'une des revendications 1 à 7, **caractérisé en ce que** le côté (17) de la section de logement circulaire (5) détourné du point de sommet du profilé en forme de V est aplati.

9. Essieu à traverse déformable en torsion selon l'une des revendications 1 à 8, **caractérisé en ce que** les branches de ressort (7, 8) peuvent être détendues de telle sorte que leurs extrémités libres (9, 10) se situent dans un plan avec le côté détourné du point de sommet du profilé en forme de V.
